Europäisches Patentamt

European Patent Office

Office européen des brevets

(11) Veröffentlichungsnummer: **0 498 263 A1**

## EUROPÄISCHE PATENTANMELDUNG

(21) Anmeldenummer: **92101329.8**

(22) Anmeldetag: **28.01.92**

(51) Int. Cl.5: **B65G 57/24**, B65G 61/00

(30) Priorität: **07.02.91 DE 4103636**

(43) Veröffentlichungstag der Anmeldung:
**12.08.92 Patentblatt 92/33**

(84) Benannte Vertragsstaaten:
**BE DE FR GB IT NL SE**

(71) Anmelder: **G E A LEIFELD + LEMKE MASCHINENFABRIK GmbH & Co. KG.**
**Industriestrasse 77**
**W-4901 Hiddenhausen 4(DE)**

(72) Erfinder: **Federspiel, Leo**
**Raiffeisenstrasse 33**
**W-8901 Diedorf(DE)**

(74) Vertreter: **Munk, Ludwig, Dipl.-Ing.**
**Patentanwalt Prinzregentenstrasse 1**
**W-8900 Augsburg(DE)**

(54) **Vorrichtung zum Stapeln bzw. Entstapeln.**

(57) Bei einer Vorrichtung zum Stapeln bzw. Entstapeln von lagenweise aufeinander aufsetzbaren Gebinden, insbesondere zum Be- bzw. Entpalettieren von Paletten (14) für lagenweise aufeinander aufsetzbare Gebinde (22), wie Flaschenkästen etc., mit einer Greiferanordnung, die einen Umschlagplatz übergreifend zumindest um die Lagenbreite hin- und herschiebbar angeordnet ist, lassen sich dadurch eine hohe Stundenleistung sowie ein kostengünstiger Aufbau erreichen, daß die Greiferanordnung zwei phasenverschoben arbeitende Greifersätze (25, 26) enthält, von denen bei jedem Seitenwechsel der Greiferanordnung jeweils ein Greifersatz (26) eine zentrale Gebinde-Aufnahmeeinrichtung (Ladeplattform 12) übergreift, die von zwei äußeren Gebinde-Aufnahmeeinrichtungen (Bereitstellungsplattformen (18, 19) flankiert ist, von denen jeweils eine vom anderen Greifersatz (25) übergriffen ist.

FIG 1

Die Erfindung betrifft eine Vorrichtung zum Stapeln bzw. Entstapeln von lagenweise aufeinander aufsetzbaren Gebinden, insbesondere zum Be- bzw. Entpalettieren von Paletten für lagenweise aufeinander aufsetzbare Gebinde, wie Flaschenkästen etc., mit einer Greiferanordnung, die einen Umschlagplatz übergreifend zumindest um die Lagenbreite hin- und herschiebbar angeordnet ist.

Bei einer bereits vorgeschlagenen Anordnung dieser Art (P 39 40 865) enthält die Greiferanordnung einen Greifersatz, der zwischen einer Aufgreifstation und einer daneben angeordneten Absetzstation des lediglich zwei Stationen enthaltenden Umschlagplatzes verschiebbar ist. Bei Anordnungen dieser Art ergeben sich vergleichsweise lange Intervalle zwischen dem Aufnehmen bzw. Absetzen jeweils einer Lage. Die erzielbare Durchsatzleistung ist daher begrenzt.

Zur Leistungssteigerung hat man sich in der Praxis bisher damit beholfen, daß mehrere Anordnungen etwa oben erwähnter Art parallel betrieben wurden. Hierbei läßt sich jedoch trotz Verdopplung des Aufwands keine Leistungsverdopplung erreichen, weil beim Palettenwechsel vergleichsweise große Wege zu überwinden sind, zumal die leeren bzw. vollen Paletten einspurig zu- bzw. abgeführt werden müssen. Hinzu kommt, daß sich hierbei die hin- und hergehenden Fahrbewegungen der Greifer ebenfalls verdoppeln, was auch zu einer Verdopplung des entstehenden Lärms und des entstehenden Verschleisses führt. Hierbei ergibt sich dementsprechend eine vergleichsweise schlechte Wirtschaftlichkeit.

Hiervon ausgehend ist es daher die Aufgabe der vorliegenden Erfindung, eine Vorrichtung eingangs erwähnter Art zu schaffen, die einfach aufgebaut ist und dennoch eine hohe Durchsatzleistung ermöglicht.

Diese Aufgabe wird erfindungsgemäß dadurch gelöst, daß die Greiferanordnung zwei phasenverschoben arbeitende Greifersätze enthält, von denen bei jedem Seitenwechsel der Greiferanordnung jeweils ein Satz eine zentrale Gebinde-Aufnahmeeinrichtung übergreift, die von zwei äußeren Gebinde-Aufnahmeeinrichtungen flankiert ist, von denen jeweils eine vom anderen Greifersatz übergriffen ist.

Diese Maßnahmen ergeben in vorteilhafter Weise eine doppeltwirkende Greiferanordnung, die nach jedem Hub ihrer hin- und hergehenden Fahrbewegung jeweils eine Gebindelage aufnehmen und gleichzeitig eine weitere Gebindelage absetzen kann und umgekehrt. Obwohl die Zahl der hin- und hergehenden Fahrbewegungen dabei gegenüber Anordnungen gattungsgemäßer Art mit lediglich einem Greifersatz nicht erhöht ist, ergibt sich hier eine Vervielfachung der Arbeitstakte. Reine Leerbewegungen sind praktisch vollständig ausgeschaltet, so daß sich praktische keine Totzeiten ergeben. Da sich jedoch gegenüber den gattungsgemäßen Anordnungen die Zahl der erforderlichen Fahrbewegungen nicht erhöht, ist trotz der demgegenüber erzielbaren Leistungssteigerung keine Erhöhung des Lärmanfalls zu befürchten. Ein weiterer, ganz besonderer Vorteil der erfindungsgemäßen Maßnahmen ist aber auch darin zu sehen, daß sich auf höchst einfache Weise eine sogenannte Verbundstapelung erreichen läßt. In diesem Zusammenhang ist nämlich davon auszugehen, daß sich infolge der hier vorgesehenen drei Stationen eine zur mittleren Station spiegelbildliche Anordnung der beiden äußeren Stationen des Umschlagplatzes ergibt, so daß beim Bepalettieren, wo die beiden äußeren Stationen als Aufgreifstation und die mittlere Station als Absetzstation fungieren, die gewünschte Spiegelbildlichkeit der Formationen der aufeinander aufzusetzenden Lagen aufgrund der spiegelbildlichen Anordnung automatisch erreicht wird. Die zum Drehen einzelner Gebinde vorgesehenen Dreheinrichtungen können hierbei in vorteilhafter Weise stationär angeordnet sein und bedürfen keiner Steuerung, was sich ebenfalls vorteilhaft auf den erforderlichen Aufwand auswirkt.

Vorteilhafte Ausgestaltungen und zweckmäßige Fortbildungen der übergeordneten Maßnahmen sind in den Unteransprüchen angegeben. So kann bei einer Anordnung mit einem die Greifer aufnehmenden Greiferkopf dieser zweckmäßig als Doppelgreiferkopf mit zwei nebeneinander angeordneten Greifersätzen ausgebildet sein. Dies ergibt eine besonders einfache Anordnung, da für den Doppelgreiferkopf nur eine Antriebs- und eine Lagereinrichtung benötigt werden.

Eine weitere vorteilhafte Maßnahme kann darin bestehen, daß bei einer Anordnung mit einem den Greiferkopf aufnehmenden horizontal verfahrbaren Laufwagen dieser auf einem über die zentrale Gebinde-Aufnahmeeinrichtung beidseitig hinaus reichenden Träger aufgenommen ist. Diese Bauweise ergibt eine hohe Stabilität.

Zweckmäßig können die Greifer der beiden Greifersätze wechselweise öffnen bzw. schließen. Dies ergibt eine besonders einfache Steuerung.

In weiterer Fortbildung der übergeordneten Maßnahmen kann jeder äußeren Gebinde-Aufnahmeeinrichtung eine im Falle einer Palettiervorrichtung vorzugsweise mehrspurige Ver- bzw. Entsorgungsstraße zugeordnet sein, die im Bereich wenigstens einer Spur eine als stationären Anlaufstift ausgebildete Dreheinrichtung aufweist. Dies ergibt eine besonders einfache und gleichzeitig höchst robuste Ausführung.

Weitere vorteilhafte Ausgestaltungen und zweckmäßige Fortbildungen der übergeordneten Maßnahmen ergeben sich aus der nachstehenden Beschreibung von Ausführungsbeispielen anhand der Zeichnung in Verbindung mit den restlichen Unteransprüchen.

In der nachstehend beschriebenen Zeichnung zeigen:

Figur 1 eine Frontansicht einer erfindungsgemäßen Palettiervorrichtung und

Figur 2 eine Draufsicht auf ein anderes Beispiel einer erfindungsgemäßen Palettiervorrichtung mit zugeordneten Versorgungseinrichtungen.

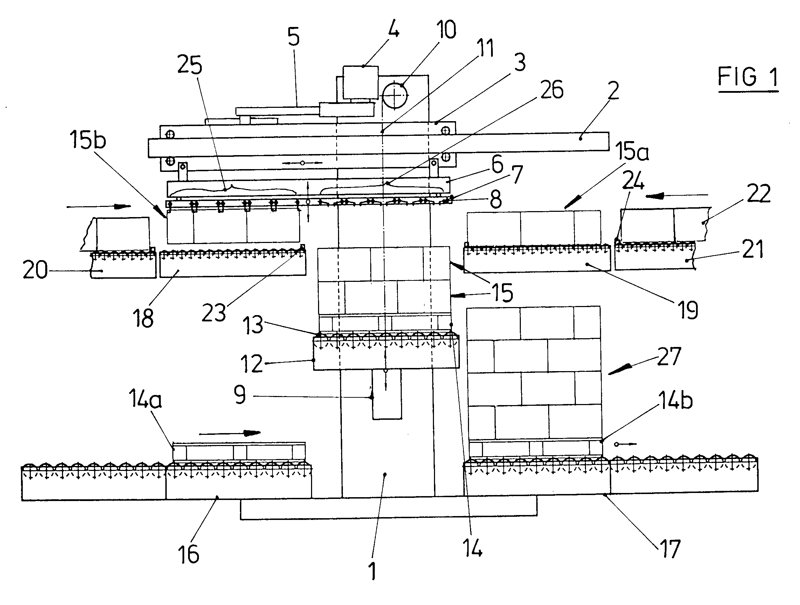

Die erfindungsgemäße Palettiervorrichtung enthält, wie am besten aus Figur 1 erkennbar ist, einen portal- oder säulenförmigen Ständer 1, an dessen oberem Endbereich ein durchgehender, beidseitig über den Ständer 1 auskragender, horizontaler Ausleger 2 fest angeordnet ist. Auf dem Ausleger 2 ist ein Laufwagen 3, hier durch Rollen, horizontal, d.h. auslegerparallel, hin- und herverschiebbar gelagert. Hierzu ist dem Laufwagen 3 eine mit einem Antriebsmotor 4 versehene Antriebseinrichtung 5 zugeordnet, die hier als mit einer Kulisse zusammenwirkender Schwenkhebel ausgebildet ist. Am Laufwagen 3 ist ein Tragrahmen 6 für einen Greiferkopf 7 aufgehängt, der mit hier als Schwenkgreifer ausgebildeten Greifern versehen ist.

Unterhalb der geschilderten Laufwagen- bzw. Greiferanordnung ist auf dem Ständer 1 ein Hubwagen 9 in vertikaler Richtung verschiebbar gelagert, der an einem auf dem Ständer 1 aufgenommenen, mit einem Antriebsmotor 10 versehenen Hubwerk 11 aufgehängt und mittels dieses schrittweise heb- und senkbar ist. Der Hubwagen 9 trägt eine horizontal angeordnete Ladeplattform 12, die hier mit einer von Rollen 13 gebildeten Rollenbahn versehen ist. Die Rollen 13 werden zum Be- bzw. Entladen der Ladeplattform 12 angetrieben. Die Ladeplattform 12 bildet eine ständerseitige, heb- und senkbare Gebinde-Aufnahmeeinrichtung. Diese wird jeweils mit einer Palette 14 beschickt, auf der Gebinde, wie Flaschenkästen etc., in Form mehrerer Lagen 15 aufnehmbar sind, die hier spiegelbildliche Formationen aufweisen.

Beim Palettieren fungiert die Ladeplattform 12 als Absetzstation, auf der die Palette 14 durch mehrere aufeinander abgesetzte Lagen 15 beladen wird. Zum Zuführen der leeren Paletten, wie bei 14a angedeutet, und Abführen der vollen Paletten, wie bei 14b angedeutet, sind auf dem Niveau der untersten Stellung der Ladeplattform 12 angeordnete Palettenstraßen 16, 17 vorgesehen, deren einander gegenüberliegende Endbereiche miteinander fluchten und durch die Ladeplattform 12 in deren unterster Stellung überbrückbar sind.

Die auf die Palette 14 aufzusetzenden Gebindelagen werden auf dem Niveau der oberen Endstellung der Ladeplattform 12 bereitgestellt. Hierzu sind zwei einander gegenüberliegende, die Endbereiche der Palettenstraßen 16, 17 übergreifende Bereitstellungsplattformen 18, 19 vorgesehen, die von der Ladeplattform 12 in deren oberster Stellung überbrückbar sind. Die Bereitstellungsplattformen 18, 19 fungieren hier als die mittlere Absetzstation flankierende Aufgreifstationen. Diese sind im Gegensatz zur durch die Ladeplattform 12 gebildeten, mittleren Absetzstation stationär angeordnet. Es ergeben sich dementsprechend drei Gebinde-Aufnahmeeinrichtungen in Form der Ladeplattform 2 und der diese flankierenden Bereitstellungsplattformen 18, 19.

Beim Palettieren werden die Gebinde auf den Bereitstellungsplattformen 18, 19 lagenweise bereitgestellt, wie in Figur 1 rechts bei 15a angedeutet ist, anschließend von den Greifern 8 des Greiferkopfes 7 erfaßt, wie in Figur 1 links bei 15b angedeutet ist, und dann auf die Palette 14 bzw. die jeweils oberste Lage 15 aufgesetzt. Anschließend wird die Ladeplattform 12 um einen der Lagenhöhe entsprechenden Schritt abgesenkt. Den Bereitstellungsplattformen 18, 19 sind Zubringer 20, 21 zugeordnet, auf denen die einzelnen Gebinde 22, wie Flaschenkästen etc., reihen- oder lagenweise gesammelt werden können. Je nachdem erfolgt die Übergabe an die Bereitstellungsplattformen 18, 19 reihen- oder lagenweise. Die Bereitstellungsplattformen 18, 19 sind mit in Zubringrichtung vorderen, festen oder beweglichen Anschlägen 23 versehen. Die Zubringer 21 sind mit in Zubringrichtung vorderen, beweglichen Anschlägen 24 versehen, die beim Übergeben einer Gebindereihe bzw. -lage an die jeweils benachbarte Bereitstellungsplattform abgesenkt werden können.

Beim Entpalettieren laufen die oben geschilderten Vorgänge in umgekehrter Richtung ab. Hierbei fungieren die ständerseitige Ladeplattform 12 als schrittweise anhebbare Aufgreifstation und die stationären Plattformen 18, 19 als seitliche Absetzstationen, die gegenläufig zur Wirkung der dargestellten Zubringer entsorgt werden. Dasselbe gilt für die Paletten, die beim Entpalettieren in vollem Zustand auf die Aufgreifstation gebracht und in leerem Zustand hiervon abgenommen werden.

Zum Übersetzen jeweils einer Gebindelage von einer seitlichen Bereitstellungsstation auf die mittlere Absetzstation bzw. umgekehrt, wird der Laufwagen 3 hin- und hergeschoben. Der dabei ausgeführte Hub entspricht dem Mittenabstand der einander benachbarten Stationen. Zum Aufnehmen bzw. Absetzen einer Gebindelage kann der Greiferkopf 7 gegenüber dem ihn tragenden Tragrahmen 6 heb- und senkbar sein. Es wäre aber auch denkbar, daß die Greifer 8 selbst bei gegenüber dem Tragrahmen 6 und Laufwagen 3 stationärer Anordnung des Greiferkopfes 7 zusätzlich zur erforderlichen Öffnungs- bzw. Schließbewegung eine Hubbewegung ausführen. Ebenso wäre es denkbar, den erforderlichen Hub durch Heben und Senken der Ladeplattform 12 und Bereitstellungsplattformen 18, 19 zu bewerkstelligen. Zusätzlich kann der Anschlag 23 wegbewegt werden.

Der Greiferkopf 7 ist als doppeltwirkender Greiferkopf ausgebildet. Der Greiferkopf 7 erstreckt sich dementsprechend über jeweils zwei einander benachbarte Stationen und ist mit zwei Greifersätzen 25, 26 versehen, die jeweils auf einer Hälfte des Greiferkopfes 7 plaziert sind. Da sich der Greiferkopf 7 jeweils über zwei Stationen erstreckt, befindet sich in den Endstellungen des hin- und herfahrenden Greiferkopfes 7 jeweils ein Greifersatz im Bereich der durch die Ladeplattform 12 gebildeten mittleren Station und ein weiterer Greifersatz im Bereich einer durch die Bereitstellungsplattformen 18, 19 gebildeten, seitlichen Station. In der der Figur 1 zugrundeliegenden linken Endstellung des Greiferkopfes 7 befindet sich der linke Greifersatz 25 im Bereich der linken Bereitstellungsplattform 18 und der rechte Greifersatz 26 im Bereich der Ladeplattform 12. Nach einem Seitenwechsel des Greiferkopfs 7 in die rechte Endstellung befindet sich der rechte Greifersatz 26 im Bereich der rechten Bereitstellungsplattform 19 und der linke Greifersatz 25 im Bereich der mittleren Ladeplattform 12.

Die Greifer 8 der beiden Greifersätze 25, 26 sind so gesteuert, daß sie wechselweise öffnen und schließen. In der dargestellten Position sind die Greifer des linken Greifersatzes 25 geschlossen und tragen die vorher von der linken Bereitstellungsplattform 18 abgenommene Gebindelage 15b. Die Greifer des rechten Greifersatzes 26 sind geöffnet. Diese haben gleichzeitig mit der Aufnahme der Gebindelage 15b die obere Gebindelage 15 auf die Palette 14 abgesetzt. Diese wurde bereits um einen Schritt abgesenkt. Nach dem nächsten Seitenwechsel des Greiferkopfes 7 in die rechte Endstellung öffnen die Greifer des Greifersatzes 15 und schließen die Greifer des Greifersatzes 26, wobei die rechts bereitgestellte Gebindelage 15a aufgenommen und die vorher erwähnte Gebindelage 15b als oberste Lage auf der Palette 14 abgesetzt werden, indem die oben beschriebene, zusätzliche Hubbewegung stattfindet. Der über zwei Stationen sich erstreckende, mit zwei gegenläufig gesteuerten Greifersätzen bestückte Greiferkopf 7 bildet dementsprechend einen doppelt-wirkenden Greiferkopf, durch den gleichzeitig jeweils eine Gebindelage aufgenommen und eine weitere abgesetzt werden können, sodaß bei jedem hin- und bei jederm hergehenden Hub des Greiferkopfes 7 jeweils eine Gebindelage aufgenommen und eine weitere abgesetzt werden, was eine hohe Durchsatzleistung ergibt.

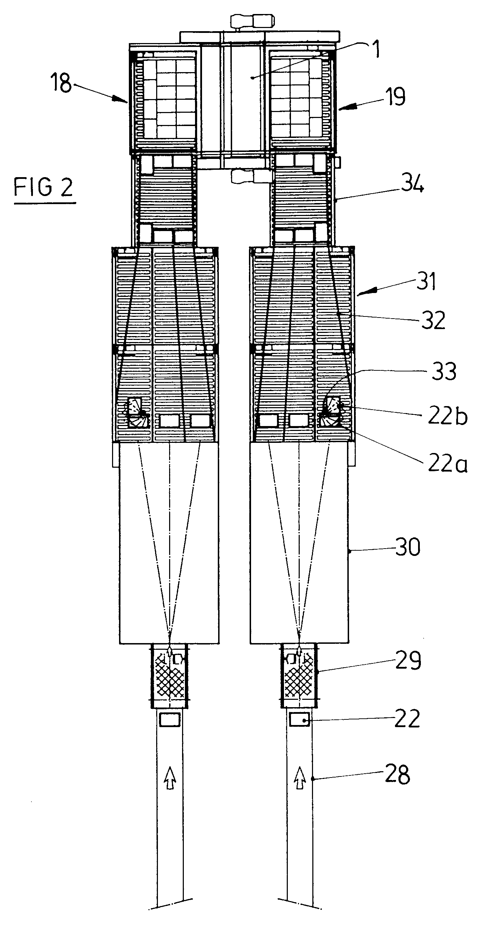

Die die mittlere Ladeplattform 12 flankierenden Bereitstellungsplattformen 18, 19 und die diesen zugeordneten Zubringeinrichtungen 20, 21 sind spiegelbildlich angeordnet und aufgebaut. Die hierauf jeweils bereitgestellten Gebindelagen können dementsprechend spiegelbildliche Formationen aufweisen, wie ein Vergleich der beiden Gebindelagen 15a, b anschaulich zeigt. Im dargestellten Beispiel sind die Kästen der jeweils äußeren Reihe längs ausgerichtet, die Kästen der beiden inneren Reihen quer. Mit Hilfe des doppelt wirkenden Greiferkopfes 7 werden nun nacheinander von der linken bzw. rechten Bereitstellungsplattform 18, 19 abgenommene Gebindelagen aufeinander aufgesetzt, wodurch sich automatisch eine Verbundstapelung ergibt, wie der auf der Palette 14b aufgenommene Stapel 27 erkennen läßt, dessen Lagen spiegelbildlich zueinander sind. Um die vorliegende Formation zu erreichen, werden die Kästen 22 der jeweils äußeren Reihe im Bereich der Zubringeinrichtungen 20, 21 um 90° gedreht. Eine entsprechende Dreheinrichtung ist in Figur 2 dargestellt.

Bei der Ausführung gemäß Figur 2 gehen die den seitlichen Bereitstellungsplattformen 18, 19 zugeordneten Zubringeinrichtungen nicht, wie bei der Ausführung gemäß Figur 1 seitlich ab, sondern nach hinten. Dasselbe gilt für die darunter sich befindenden Palettenfahrstraßen. Es ergeben sich dementsprechend zwei parallele, vom Ständer 1 nach hinten abgehende Versorgungsstränge. Diese enthalten jeweils einen bei der Verarbeitung von Flaschenkästen von einem sogenannten Einpacker kommenden Zulauf 28, auf dem die einzelnen Kästen 22 hintereinander transportiert werden. Diese werden anschließend über eine mittetls einer Zuteileinrichtung 29 beaufschlagbaren Weiche 30 auf mehrere Spuren aufgeteilt. Die Anzahl der Spuren entspricht der Anzahl der Kastenreihen pro Gebindelage. Dementsprechend sind hier drei Spuren vorgesehen. An die Weiche 30 schließt sich ein entsprechend mehrspuriger Puffer 31 an, auf welchem die Spuren durch Leitbleche 32 auf die Lagenbreite zusammengeführt werden. Im Bereich des Puffers 31 kann auch eine Drehung der Kästen einer Reihe, hier der jeweils äußeren Reihe erfolgen. Hierzu ist im Bereich der der jeweils äußeren Reihe zugeordneten Spur ein stationärer Anlaufstift 33 vorgesehen, an dem die jeweils in Querausrichtung ankommenden Kästen 22 anlaufen und dabei um 90° gedreht werden, wie bei 22a, b angedeutet ist. Da auf den Bereitstellungsplattformen 18, 19 jeweils eine gleichbleibende Lagenformation möglich ist, kann der Anlaufstift stationär angeordnet sein und bedarf keiner Steuerung. Vom Puffer 31 können die einzelnen Reihen auf die jeweils zugeordnete Bereitstellungsplattform 18, 19 geschoben werden. Im dargestellten Ausführungsbeispiel ist noch eine Ausrichtplattform 34 zwischengeschaltet, auf der jeweils eine komplette Lage gesammelt werden kann, die anschließend komplett an die nachgeordnete Bereitstellungsplattform übergeben werden kann. Die der Figur 2 zugrungeliegende Ausführung mit praktisch zur hin- und hergehenden Bewegung des Greiferkopfes rechtwinkliger Anordnung der Versorgungsstränge ergibt ersichtlich eine besonders platzsparende Anordnung.

Beim Entpalettieren werden anstelle der hier gezeigten Versorgungsstränge Entsorgungsstränge benötigt. Diese können, wie in Figur 1, in Richtung der Greiferkopfbewegung oder, wie in Figur 2, rechtwinklig hierzu angeordnet sein. Die Entsorgungsstränge sind dabei in an sich bekannter Weise einspurig. Zum Drehen der nicht die gewünschte Ausrichtung aufweisenden Kästen kann dabei im Bereich jedes Entsorgungsstrangs ebenfalls eine Drehvorrichtung in Form eines stationären Anlaufstifts vorgesehen sein.

Vorstehend sind zwar einige bevorzugte Ausführungsbeispiele der Erfindung näher erläutert, ohne daß jedoch hiermit eine Beschränkung verbunden sein soll. Vielmehr stehen dem Fachmann eine Reihe von Möglichkeiten zur Verfügung, um den allgemeinen Gedanken der erfindungsgemäßen Lösung an die Verhältnisse des Einzelfalls anzupassen. So wäre es beispielsweise ohne weiteres denkbar, anstelle der gezeigten Schwenkgreifer Sauggreifer etc. vorzusehen, sofern ein anderes Gebindegut als hier palettiert bzw. entpalettiert werden soll.

**Patentansprüche**

1. Vorrichtung zum Stapeln bzw. Entstapeln von lagenweise aufeinander aufsetzbaren Gebinden, insbesondere zum Be- bzw. Entpalettieren von Paletten (14) für lagenweise aufeinander aufsetzbare Gebinde (22), wie Flaschenkästen etc., mit einer Greiferanordnung, die einen Umschlagplatz übergreifend zumindest um die Lagenbreite hin- und herschiebbar angeordnet ist, **dadurch gekennzeichnet, daß** die Greiferanordnung zwei phasenverschoben arbeitende Greifersätze (25, 26) enthält, von denen bei jedem Seitenwechsel der Greiferanordnung jeweils ein Greifersatz (26) eine zentrale Gebinde-Aufnahmeeinrichtung (Ladeplattform 12) übergreift, die von zwei äußeren Gebinde-Aufnahmeeinrichtungen (Bereitstellungsplattformen 18, 19) flankiert ist, von denen jeweils eine vom anderen Greifersatz (25) übergriffen ist.

2. Vorrichtung nach Anspruch 1 mit einem Greiferkopf (7), **dadurch gekennzeichnet, daß** der Greiferkopf (7) als doppelt wirkender Greiferkopf ausgebildet ist, wobei die beiden Greifersätze (25, 26) auf jeweils einer Hälfte des Greiferkopfes (7) plaziert sind, dessen Länge über jeweils zwei einander benachbarte Gebinde-Aufnahmeneinrichtungen reicht.

3. Vorrichtung nach Anspruch 2 mit einem den Greiferkopf (7) aufnehmenden, horizontal verfahrbaren Laufwagen (3), **dadurch gekennzeichnet, daß** der Laufwagen (3) auf einem über die zentrale Gebinde-Aufnahmeeinrichtung (Ladeplattform 12) beidseitig hinausreichenden, horizontal angeordneten Träger aufgenommen ist.

4. Vorrichtung nach Anspruch 3, **dadurch gekennzeichnet, daß** der Träger als auf einem Ständer (1) aufgenommener Ausleger (2) ausgebildet ist, der beidseitig über den Ständer (1) auskragt.

5. Vorrichtung nach einem der vorhergehenden Ansprüche, **dadurch gekennzeichnet, daß** die Greifer (8) der beiden Greifersätze (25, 26) wechselweise öffnen bzw. schließen.

6. Vorrichtung nach einem der vorhergehenden Ansprüche, **dadurch gekennzeichnet, daß** beide Greifersätze (25, 26) in den Endstellungen des Greiferkopfes (7) eine gemeinsame Hub- und Senkbewegung ausführen.

7. Vorrichtung nach einem der vorhergehenden Ansprüche, **dadurch gekennzeichnet, daß** die zentrale Gebinde-Aufnahmeeinrichtungals mittels eines Hubwerks (11) schrittweise heb- und senkbarer Tisch (Ladeplattform 12) ausgebildet ist.

8. Vorrichtung nach einem der vorhergehenden Ansprüche, **dadurch gekennzeichnet, daß** die die zentrale Gebinde-Aufnahmeeinrichtung (Ladeplattform 12) flankierenden, äußeren Gebinde-Aufnahmeeinrichtungen als im Bereich der oberen Endstellung der mittleren Gebinde-Aufnahmeeinrichtung (Ladeplattform 12) stationär angeordnete Tische (Bereitstellungsplattformen 18, 19) ausgebildet sind.

9. Vorrichtung nach einem der vorhergehenden Ansprüche, **dadurch gekennzeichnet, daß** die die zentrale Gebinde-Aufnahmeeinrichtung (Ladeplattform 12) flankierenden, äußeren Gebinde-Aufnahmeeinrichtungen (Bereitstellungsplattformen 18, 19) spiegelbildlich angeordnet und ausgebildet sind.

10. Vorrichtung nach einem der vorhergehenden Ansprüche, **dadurch gekennzeichnet, daß** jeder äußeren Gebinde-Aufnahmeeinrichtung (Bereitstellungsplattform 18, 19) eine im Falle einer Palettiervorrichtung vorzugsweise mehrspurige Ver- bzw. Entsorgungseinrichtung (20, 21) zugeordnet ist, die im Bereich wenigstens einer Spur eine als stationärer Anlaufstift (33) ausgebildete Dreheinrichtung aufweist.

FIG 1

EP 0 498 263 A1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 158 465 (HOLSTEIN UND KAPPERT) | 1-3,5-9 | B65G57/24 |
| Y | * Seite 6, letzter Absatz - Seite 8, Zeile 19; Abbildungen 1,2 * | 4,10 | B65G61/00 |
| | --- | | |
| Y | DE-A-2 929 234 (HOLSTEIN UND KAPPERT) | 4 | |
| A | * Seite 6, letzter Absatz - Seite 7, Zeile 3; Abbildungen 1,2 * | 1,3,5,6 | |
| | --- | | |
| Y | AT-B-323 648 (INTERPLAN) | 10 | |
| A | * Seite 4, Zeile 10 - Zeile 12; Abbildungen 1-4,12 * | 1,3,5-8 | |
| | --- | | |
| X | DE-B-1 918 017 (C.KELLER & CO) | 1-3,5-9 | |
| | * Spalte 2, Zeile 41 - Zeile 61; Abbildungen * | | |
| | --- | | |
| X | DE-B-1 284 357 (HOLSTEIN UND KAPPERT) | 1-3,5-8 | |
| | * Spalte 2, Zeile 13 - Zeile 49; Abbildung 1 * | | |
| | --- | | |
| X | DE-A-2 138 120 (ENZINGER-UNION-WERKE) | 1-3,5 | |
| A | * Seite 7, Zeile 10 - Zeile 26; Abbildung 1 * | 7-9 | |
| | ----- | | |

RECHERCHIERTE SACHGEBIETE (Int. Cl.5)

B65G

Der vorliegende Recherchenbericht wurde für alle Patentansprüche erstellt

| Recherchenort | Abschlußdatum der Recherche | Prüfer |
|---|---|---|
| DEN HAAG | 07 MAI 1992 | NEVILLE D.J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..........................................................................
& : Mitglied der gleichen Patentfamilie, übereinstimmendes
    Dokument

EPO FORM 1503 03.82 (P0403)